# EUROPEAN PATENT SPECIFICATION

(11) **EP 4 420 119 B1**
(45) Date of publication and mention of the grant of the patent: **04.11.2026**
(21) Application number: 22800587.2
(22) Date of filing: 21.10.2022
(51) Int. Cl.: G10L 15/22, G01S 3/80, G06F 3/16, G01S 5/18

(54) **ELECTRONIC DEVICE COMPRISING A NEAR FIELD VOICE CONTROL SYSTEM FOR DETECTION, DIAGNOSTIC AND TREATMENT EQUIPMENT**
ELEKTRONISCHE VORRICHTUNG MIT EINEM NAHFELDSPRACHSTEUERUNGSSYSTEM FÜR ERKENNUNGS-, DIAGNOSE- UND BEHANDLUNGSAUSRÜSTUNG
DISPOSITIF ÉLECTRONIQUE COMPRENANT UN SYSTÈME DE COMMANDE VOCALE EN CHAMP PROCHE PERMETTANT LA DÉTECTION, LE DIAGNOSTIC ET L'ÉQUIPEMENT DE TRAITEMENT

(30) Priority: 23.10.2021 DK BA202100097 U
(43) Date of publication of application: 28.08.2024
(73) Proprietor: Sens-Vue ApS, 2800 Kongens Lyngby (DK)
(72) Inventor: BIAN, Jialin, 2870 Dyssegård (DK)
(74) Representative: COPA Copenhagen Patents
(86) International application number: PCT/DK2022/050221
(87) International publication number: WO 2023/066437

(56) References cited:
- EP-A2- 1 217 608
- US-A1- 2009 076 827
- US-A1- 2015 006 184
- US-A1- 2015 313 457
- US-A1- 2015 340 040
- US-A1- 2016 351 191
- US-A1- 2021 158 809

## Description

The present disclosure relates to an electronic device, having a voice control module, for detecting voice commands from a user, to control a local equipment or machine, especially a diagnostic equipment, for example humphrey field analyzer. The present disclosure further relates to a sound localization method to limit the voice control system only to response to a near field voice.

### Background

Voice control systems have been massively integrated in many of applications, including Smart Home, like Google Home, Apple Siri and Amazon Alexa. However, today the most common implementations are online systems and require via wifi and/or smartphone, at least during their setup stage. Further, these systems are designed to receive all voice signals from all the direction of the space around. Therefore, the privacy and security level of these systems are relatively low, because they could be activated by any voice regardless of the location of the voice sources. Furthermore, the operation is relatively complicated, as it normally requires a network and/or a running app.

On the other hand, as the most nature response, voice has been considered for many human-computer interactions. Especially for diagnostic equipment in medical applications, a voice from the user is the quickest and most direct mean to response the equipment. The user, who operates such an equipment or is under examination with the equipment, is often very close by and lies normally in a relatively fixed area relative to the equipment. Therefore, it is highly desired for a voice control system to only accept voice signals coming from a dedicated area or space range.

In the prior art, it is known from the patent applications US2016/0351191A1 and US2015/0340040A1 techniques for processing voice commands using voice recognition accounting for the distance of the user to a mobile terminal receiving the voice commands with a plurality of microphones.

### Summary of invention

The security level and the risk of being manipulated by intruders have become the main concerns for most of voice control systems. Especially for diagnostic applications in hospitals or clinics, the operation easiness and high privacy are highly desired. For such a situation, a user is often quite close to the equipment or machine, where a voice coming from a near field around the machine is the most relevant. For the simplification purpose, the user and the voice source are interchangeable in the following texts of this document. The purpose of the present application is therefore to disclose a near field voice control method and system, which only accepts a voice signal from a nearby space around the system and can function without requiring either internet connections or running apps.

The invention provides a method according to claim 1 and system according to claim 4. By arranging a microphone array (or at least two voice receiving units) according to these claims, the location of the source of a voice is identified. Such an information is used further to limit the working space of the voice control system. A certain space range can be predefined depending on the local equipment or machine, which is being controlled by the disclosed voice control system. When a user starts to give a voice signal, the microphone array identifies the location and direction of the user or the source of the voice through a signal processing unit. Depending on whether the user is within the predefined space range or not, the system either activate the voice recognition unit or ignore the detected voice. In such a way, only voice in the near field can be detected by the voice control system, therefore, the local equipment or machine can be precisely controlled by a dedicated user;

In one embodiment (not encompassed by the wording of the claims), plural microphones are arranged into an array. Each microphone has a relatively narrow response directionality and is positioned both from a different distance and in a different direction relative to the user. When a user generates a voice signal, each microphone collects a slightly different voice data in term of both the amplitude and the phase (or time delay) due to their different alignments. By analyzing these data, the location of the voice source can be extracted;

In another embodiment, as the position of a user is relatively fixed, for example, when a user is under examination with humphrey field analyzer, it requires only two microphones, wherein the distance between these two microphones is large enough to cause a clear variation on both the amplitude and the phase of their received voice data. According to the invention, one microphone faces directly to the user and its reception angle is 0-degree. The other microphone experiences a 90-degree reception angle, which is perpendicular to the user. For a near field case, the sound attenuation along its propagation can be neglected, so the amplitude difference between the detected voice data follows mainly the directionality response pattern and the phase difference (time delay) follows the distance between the user and the microphones, from these information, the position of the voice source is estimated.

To improve the accuracy for the case where a user has a bit more freedom to locate him/herself relative to the diagnostic equipment, in another embodiment, there microphones are arranged into an array.

### Description of the drawings

The invention will in the following be described in greater details with reference to the accompanying drawings:
Fig. 1 illustrates a block diagram schematically showing a method for controlling a local equipment or machine by using a near field voice signal.
Fig. 2 shows a block diagram illustrating a system for controlling a local equipment or machine by using near field voice signal.
Fig. 3 shows an example embodiment of an alignment of two microphones for identifying the position of a voice source.
Fig. 4 shows a top view of the example embodiment of an alignment of two microphones for identifying the position of a voice source.
Fig. 5 shows an example embodiment of an alignment of three microphones for identifying the position of a voice source.
Fig. 6 shows a top view of the example embodiment of an alignment of three microphones for identifying the position of a voice source.
Fig. 7 shows an example embodiment of an alignment of three microphones for identifying the position of a voice source.

### Detailed description

This disclosure describes a method and system for identifying the position of the voice source and thereafter controlling a local machine or equipment by a voice signal.

For many equipment or machines, the target user is often well positioned while operating the equipment. In such a situation, the voice signals from the user are the most natural commands which can be used to control the equipment.

To avoid any misoperations by unwanted voice signals and enhance the security level, this application presents a near field voice control method: the position of a user is estimated through a designed microphone array. In such a way, a voice originating only from a predefined space range is valid, all other voices outside the predefined space range are neglected.

With the help of the drawings showing example embodiments, the disclosed method and system are explained in details.

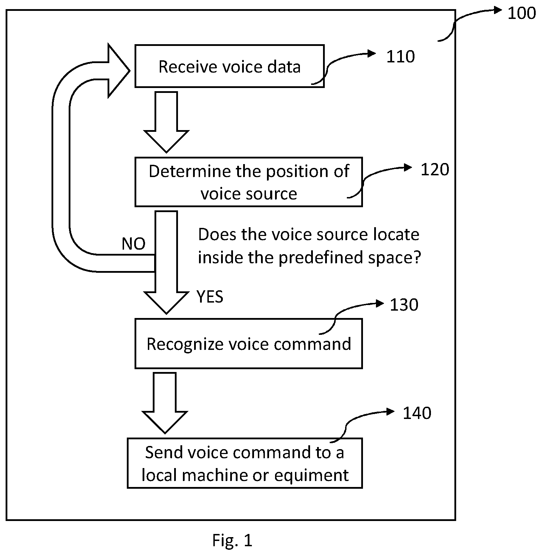

Fig. 1 presents an example block diagram of a near field voice control method, 100, wherein the position of a user or the source of a voice signal is identified first before activating the voice recognition function.

STEP 1: A voice collection block 110 to receive voice data.

STEP 2: Based on the detected voice signals, the position of voice source can be extracted in 120. Whether or not to pass the detected voice data to the following function block 130, voice recognition, depends on the position of the source of the detected voice: if the voice source lies inside a predefined space range (YES), the voice data is further processed by 130 to recognize the voice command. If the voice source is outside the predefined space range (NO), the detected voice data is ignored and the procedure goes back to STEP 1 and voice recognition function 130 keeps standing by.

STEP 3: After receiving a qualified voice data from STEP 2, the voice recognition block 130 analyses the received signal to extract a command which matches with the preloaded voice command database.

STEP 4: Control function 140 to send the extracted voice command to a local machine or equipment.

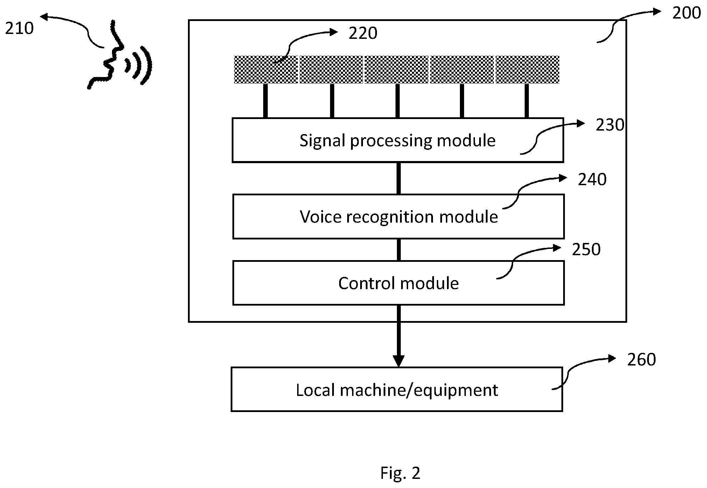

According to the method, as explained in Fig. 1, an embodiment of the proposed system is illustrated in Fig. 2. The disclosed near field voice control system 200 is connected to a local machine or equipment 260 in a wired or wirelessly way. The voice control system 200 comprises:
A module of microphone array 220 to collect voice signal 210 from the surrounding space. The microphone array 220 includes at least two microphones, which are aligned in a certain designed geometry in order to simultaneously detect a voice from various distances or angles. The output of the microphone array module 220 is connected to a signal processing module 230, wherein the voice data from each individual microphone are analysed in term of both the amplitude and the phase. As a microphone has a well-defined directionality response, the position of the source of a voice can be derived from this analysis. A certain space range, which is predefined according to the type and operation requirements of the local equipment, is preloaded in the signal processing module 230. If the source of the voice locates inside the predefined space range, the signal processing module 230 will send the received voice data further to voice recognition module 240. Otherwise, if the source of the voice locates outside of the predefined space range, the detected voice data will be ignored by the signal processing module 230. The whole system 200 returns to collect new voices.

Once obtaining a voice data from the signal processing module 230, the voice recognition module 240 starts to analyse the voice data and compare it with a preloaded command database, until a matched command found, that command is further sent to the control module 250.

Through a wired or wireless connection, the control module 250 operates a local machine or equipment 260 with the matched command.

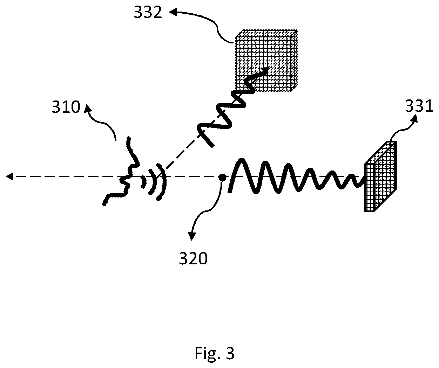

According to the description in Fig. 2, a microphone array comprises at least two microphone elements. These plural microphones are aligned in a designed geometry. Fig. 3 shows one embodiment of a microphone array with two microphone elements. A user or a voice source is illustrated as 310. Two microphones, 331 and 332, are perpendicular to each other: the first microphone 331 faces directly toward the user, therefore it has the highest responsibility as the coming voice in a direction angle of 0 degree. The second microphone 332 faces perpendicular to the user and the first microphone 331, therefore the voice is detected by the microphone 332, but in a direction angle of about 90 degree instead. The centre point of the voice control system is presented by 320, which defines also the origin and the axis used by the signal processing module to identify the coordinates of the source of a voice signal.

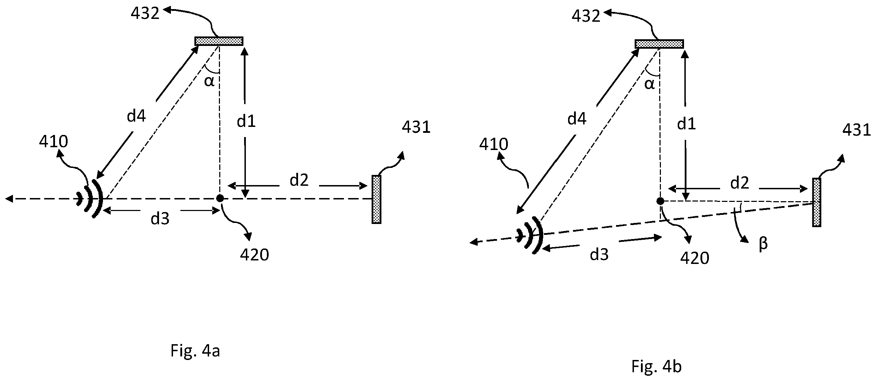

Fig. 4a shows a top view of the example embodiment of Fig .3. 410 is the location of the source of a voice. Two microphones 431 and 432 are aligned perpendicularly to each other. d1 and d2 are known parameters, which are the distances between 431/432 and the centre point of the voice control system, 420.

Three unknown parameters, d3, d4 and α, are related to each other: $tan \left(α\right) = \frac{d 3}{d 4} and d {1}^{2} + d {3}^{2} = d {4}^{2}$

Therefore, only one of them is independent. The rest of two can be derived accordingly. By knowing the time/phase delay, Δt, between two detected voice data by 431 and 432, as shown in Fig. 4a: $Δ t = \left|\frac{d 2 + d 3}{s}-\frac{d 4}{s}\right|$

Where s is the speed of sound. Therefore, three unknown parameters can be extracted from these three equations.

In Fig. 4b, if the user is accidentally offset from the axis at which the first microphone 431 directly faces and β is used to present the offset of the angle, the measured amplitude difference between two microphones can be utilized to decide the parameter β.

For this case, even though there are four unknown parameters: d3, d4, α and β, but only two of them are independent. For instance, by knowing d4 and α, d3 and β are decided at the same time. Therefore, two equations govern all four parameters.
(1) Phase/time difference: $Δ t = \left|\frac{d 2 / cos \left(β\right) + d 3}{s}-\frac{d 4}{s}\right|$
(2) Amplitude difference: $\frac{{I}_{431}}{{I}_{432}} = \frac{R \left(β\right)}{R \left(α\right)}$

Where *I*_{431,432} are the voice amplitudes detected by microphones 431 and 432, respectively; *R*(θ) is the directionality response of the microphone; θ is the acceptance angle.

Therefore, based on these two equations, the signal processing module analyse the received voice data by two microphones and locate the position of the user.

For the embodiment as shown in Figs. 3 and 4, the accuracy of this positioning is largely determined by the accuracy of *I*_{431,432} and *R*(*θ*). To achieve the highest positioning accuracy, an ultra-cardioid or shotgun microphone is preferred.

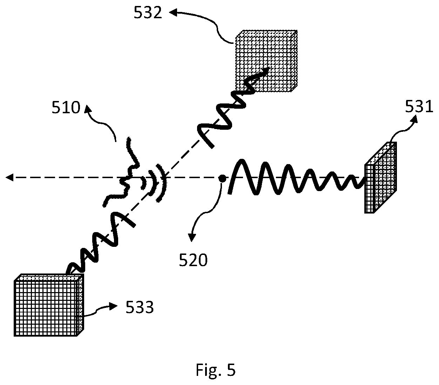

To further improve the accuracy, another embodiment with three microphones is illustrated by Fig. 5, where 510 is the user or the voice source. 520 is the centre of the system or the origin of the coordinate system. 531-533 are three microphones to collect a voice signal. 531 is aligned directly to face the user. 532 and 533 are facing towards each other and they both are perpendicular to the first microphone 531. Compared with the example in Fig. 3, a third microphone 533 is aligned at the mirrored position of the second microphone 532 relative to the axis of the system. As 532 and 533 are symmetric to each other, the microphone array can provide an improved sensitivity and accuracy to any offset of a user.

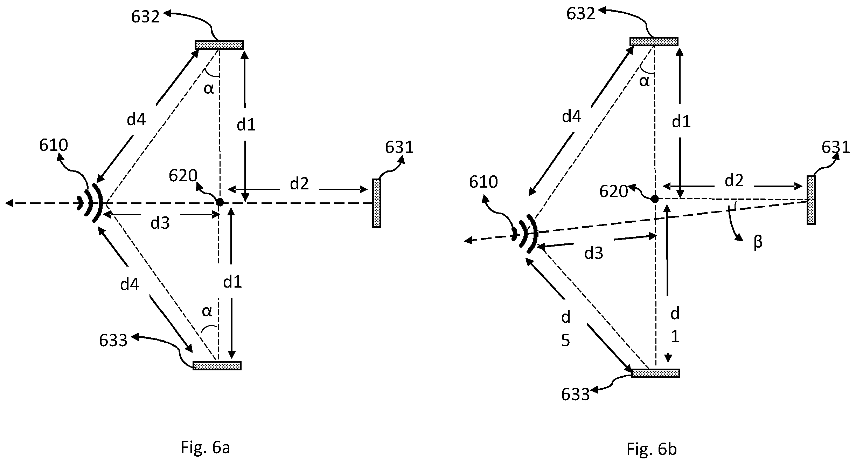

In Fig. 6, the top view of the embodiment of Fig. 5 describes the alignment of this configuration, where 610 is the user; 620 is the origin; 631-633 are three microphones; d1 and d2 are known parameters; d3, d4 and α are unknown parameters; In Fig. 6a, d3, d4 and α are dependent on each other as long as one of them is known, the rest of two can be derived by using the same method as described in Fig. 4a. For such a situation, the third microphone provides an extra verification for locating the source of a voice.

When the voice source starts deviating from the axis, as shown in Fig. 6b, β is the offset angle from the axis, which is also the reception angle of the first microphone 631. To locate the position of the user, five unknown valuables α, β, d3, d4 and d5 have to be determined. However, two of them are independent parameters. For instance, once α and β are known, the rest of three are also decided. These five parameters are related to each other through the following three equations: $d {5}^{2} = d {4}^{2} + 4 ⋅ d {1}^{2} - 4 d 4 ⋅ d 1 ⋅ cos \left(α\right)$ $d {3}^{2} = d {4}^{2} + {\left(d1+d2⋅tan\left(β\right)\right)}^{2} - 2 d 4 ⋅ \left(d1+d2⋅tan\left(β\right)\right) ⋅ cos \left(β\right)$ $d {5}^{2} = d {3}^{2} + {\left(d1-d2⋅tan\left(β\right)\right)}^{2} - 2 d 3 ⋅ \left(d1-d2⋅tan\left(β\right)\right) ⋅ cos \left(90-β\right)$

The measured time delays Δ*t*₁₂ between the first microphone 631 and the second microphone 632, Δ*t*₂₃ between the second microphone 632 and the third microphone 633 and Δ*t*₃₁ between the third microphone 633 and the first microphone 631 are
(1) $Δ {t}_{12} = \left|\frac{d 2 / cos \left(β\right) + d 3}{s}-\frac{d 4}{s}\right|$
(2) $Δ {t}_{23} = \left|\frac{d 4}{s}-\frac{d 5}{s}\right|$
(3) $Δ {t}_{31} = \left|\frac{d 5}{s}-\frac{d 2 / cos \left(β\right) + d 3}{s}\right|$

Therefore, based on these equations, the signal processing module, without knowing the directionality response *R*(*θ*) of the microphone, can analyse the received voice data and locate the position of the user.

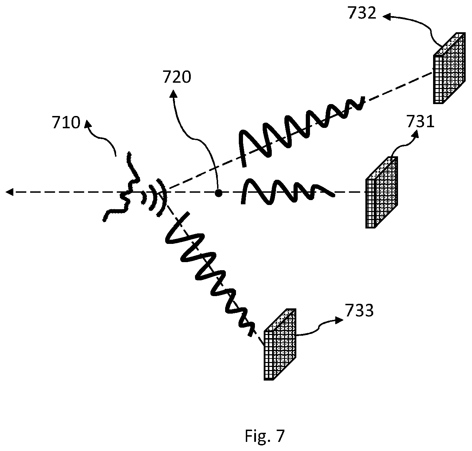

Another embodiment (not encompassed by the wording of the claims) with three microphones is shown in Fig. 7. Three microphones 731, 732 and 733 are facing to the same direction, but separated by a certain distance. By using the method described in Fig. 6, the signal processing module 230 can extract the location of the user after analysing the voice data received by three microphones.

Further, after the position of the user is identified, the signal processing module further compare the location with a predefined space range. The predefined space range is preferably relative to the origin as shown in Figs 4-6. To achieve a great accuracy, the predefined space is preferably a distance range of 5 cm, 10 cm or 20 cm. When the user is outside the predefined space range, the received voice data are neglected and the voice recognition module 240 stays in standby state. However, if the user is inside the predefined space range, the received voice data is transmitted to voice recognition module 240 to extract the carried command by the original voice. Thereafter, the command is executed through control module 250 to finally operate a local machine or equipment 260.

Compared with prior art, a near field voice control system of the application has a voice recognition module and a user location identification module, which enables the user a higher level of security and privacy. A microphone array, together with a signal processing unit, is embedded in the system, wherein the system firstly verifies whether the user lies inside the predefined space range or not, before a voice signal is recognized. In summary, the proposed method and system response only to a specific space range, therefore provide a more precise voice control function for diagnostic applications and near field voice detection.

## Claims

1. A near field voice control method, adapted to a voice control system which can connect to and control a local machine or equipment, the method comprising:
Receiving a voice signal;
Analysing the received data to determine the position of the voice source;
If the voice source is located outside a predefined space range, ignoring the received voice signal; otherwise, if the voice source is located inside the predefined space range, executing voice recognition for the received voice data;
Matching the voice signal with a voice command database;
Sending the matched voice command to a local machine or equipment;
the method being **characterised in that** the step of analysing the received data to determine the position of the voice source comprises:
- collecting, using at least two voice receiving units, a voice signal from at least two different positions, and
- determining the position of the voice source through comparing the voice data collected from at least two of the voice receiving units; and
wherein the at least two voice receiving unit comprise a first microphone and a second microphone arranged perpendicularly to each other, the first microphone being configured to face a user.

2. The voice control method of claim 1, wherein the predefined space range is defined as a certain distance range, and wherein the reference origin is the center of the voice control system.

3. The voice control method of claim 2, wherein the certain distance range is 20 cm, and wherein only near field voice signals can be collected by the voice receiving units.

4. A near field voice control system, comprising:
A voice receiving module comprising a microphone array;
A voice recognition module;
A signal processing module being coupled to the voice receiving module and to the voice recognition module and being configured to compare both the amplitude and phase differences among the received voice data from the voice receiving module, the signal processing module further being configured to determine the position of the voice source, the signal processing module being configured to activate the voice recognition module if the voice source is located inside a predefined space range and to reject the received voice data if the voice source is located outside the predefined space range, the voice recognition module extracting, when activated by the signal processing module, a voice command from the received voice data;
A control module, connected to a local machine or equipment, the control module sending the extracted voice command to the local machine or equipment, the near field voice control system is **characterised in that** the microphone array comprises a first microphone and a second microphone arranged perpendicularly to each other, the first microphone being configured to face a user.

5. The voice control system of claim 5, wherein the voice receiving module comprises a microphone array comprising at least two microphones, wherein each microphone has a known directionality response and collects the voice signal from a different position and/or direction.

6. The voice control system of claim 4, wherein the predefined space range is relative to the center of the voice control system and has a distance range of 20 cm.

7. A voice control system in accordance with any of claims 4-6, wherein the local machine or equipment is diagnostic equipment for medical applications.

8. A voice control system in accordance with claim 7, wherein the local machine or equipment is a Humphrey field analyzer.

9. A voice control system in accordance with any of claims 4-6, wherein the local machine or equipment is treatment equipment.

10. A voice control system in accordance with any of claims 4-9, wherein the voice control system is in wireless communication with the local machine or equipment.

## Patentansprüche

1. Nahfeldsprachsteuerungsverfahren, angepasst an ein Sprachsteuerungssystem, das sich mit einer lokalen Maschine oder Ausrüstung verbinden und diese steuern kann, das Verfahren umfassend:
Empfangen eines Sprachsignals;
Analysieren der empfangenen Daten, um die Position der Sprachquelle zu bestimmen;
Ignorieren des empfangenen Sprachsignals, falls die Sprachquelle außerhalb eines vordefinierten Raumbereichs angeordnet ist; andernfalls, falls die Sprachquelle innerhalb des vordefinierten Raumbereichs angeordnet ist, Durchführen einer Spracherkennung für die empfangenen Sprachdaten;
Abgleichen des Sprachsignals mit einer Sprachbefehlsdatenbank;
Senden des abgeglichenen Sprachbefehls an eine lokale Maschine oder Ausrüstung;
wobei das Verfahren **dadurch gekennzeichnet ist, dass** der Schritt des Analysierens der empfangenen Daten zum Bestimmen der Position der Sprachquelle umfasst:
- Erfassen eines Sprachsignals von mindestens zwei unterschiedlichen Positionen unter Verwendung von mindestens zwei Spracherfassungseinheiten, und
- Bestimmen der Position der Sprachquelle durch Vergleichen der Sprachdaten, die von mindestens zwei der Spracherfassungseinheiten erfasst wurden; und
wobei die mindestens zwei Spracherfassungseinheiten ein erstes Mikrofon und ein zweites Mikrofon umfassen, die senkrecht zueinander angeordnet sind, wobei das erste Mikrofon ausgebildet ist, auf einen Benutzer gerichtet zu sein.

2. Sprachsteuerungsverfahren nach Anspruch 1, wobei der vordefinierte Raumbereich als ein bestimmter Abstandsbereich definiert ist und wobei der Bezugsursprung das Zentrum des Sprachsteuerungssystems ist.

3. Sprachsteuerungsverfahren nach Anspruch 2, wobei der bestimmte Abstandsbereich 20 cm beträgt, und wobei nur Nahfeldsprachsignale durch die Spracherfassungseinheiten erfasst werden können.

4. Nahfeldsprachsteuerungssystem, umfassend:
ein Spracherfassungsmodul, umfassend ein Mikrofonarray;
ein Spracherkennungsmodul;
ein Signalverarbeitungsmodul, das mit dem Spracherfassungsmodul und mit dem Spracherkennungsmodul gekoppelt ist und ausgebildet ist, die Amplituden- und Phasenunterschiede unter den empfangenen Sprachdaten von dem Spracherfassungsmodul zu vergleichen, wobei das Signalverarbeitungsmodul weiter ausgebildet ist, die Position der Sprachquelle zu bestimmen, wobei das Signalverarbeitungsmodul ausgebildet ist, das Spracherkennungsmodul zu aktivieren, falls die Sprachquelle innerhalb eines vordefinierten Raumbereichs angeordnet ist, und die empfangenen Sprachdaten zurückzuweisen, falls die Sprachquelle außerhalb des vordefinierten Raumbereichs angeordnet ist, wobei das Spracherkennungsmodul, wenn es durch das Signalverarbeitungsmodul aktiviert wird, einen Sprachbefehl aus den empfangenen Sprachdaten extrahiert;
ein Steuermodul, das mit einer lokalen Maschine oder Ausrüstung verbunden ist, wobei das Steuermodul den extrahierten Sprachbefehl an die lokale Maschine oder Ausrüstung sendet,
wobei das Nahfeldsprachsteuerungssystem **dadurch gekennzeichnet ist, dass** das Mikrofonarray ein erstes Mikrofon und ein zweites Mikrofon umfasst, die senkrecht zueinander angeordnet sind, wobei das erste Mikrofon ausgebildet ist, auf einen Benutzer gerichtet zu sein.

5. Sprachsteuerungssystem nach Anspruch 5, wobei das Spracherfassungsmodul ein Mikrofonarray umfasst, das mindestens zwei Mikrofone umfasst, wobei jedes Mikrofon eine bekannte Richtcharakteristik aufweist und das Sprachsignal aus einer unterschiedlichen Position und/oder Richtung erfasst.

6. Sprachsteuerungssystem nach Anspruch 4, wobei der vordefinierte Raumbereich sich auf das Zentrum des Sprachsteuerungssystems bezieht und einen Abstandsbereich von 20 cm aufweist.

7. Sprachsteuerungssystem nach einem der Ansprüche 4-6, wobei die lokale Maschine oder Ausrüstung Diagnoseausrüstung für medizinische Anwendungen ist.

8. Sprachsteuerungssystem nach Anspruch 7, wobei die lokale Maschine oder Ausrüstung ein Humphrey Field Analyzer ist.

9. Sprachsteuerungssystem nach einem der Ansprüche 4-6, wobei die lokale Maschine oder Ausrüstung Behandlungsausrüstung ist.

10. Sprachsteuerungssystem nach einem der Ansprüche 4-9, wobei das Sprachsteuerungssystem in drahtloser Kommunikation mit der lokalen Maschine oder Ausrüstung steht.

## Revendications

1. Procédé de commande vocale en champ proche, adapté à un système de commande vocale qui peut se connecter à une machine locale ou à un équipement local et les commander, le procédé comprenant les étapes consistant à :
recevoir un signal vocal ;
analyser les données reçues pour déterminer la position de la source vocale ;
si la source vocale est située à l'extérieur d'une plage spatiale prédéfinie, ignorer le signal vocal reçu ; sinon, si la source vocale est située à l'intérieur de la plage spatiale prédéfinie, exécuter une reconnaissance vocale pour les données vocales reçues ;
mettre en correspondance le signal vocal avec une base de données de commande vocale ;
envoyer la commande vocale mise en correspondance à une machine locale ou un équipement local ;
le procédé étant **caractérisé en ce que** l'étape d'analyse des données reçues pour déterminer la position de la source vocale comprend :
- la collecte, au moyen d'au moins deux unités de réception vocale, d'un signal vocal à partir d'au moins deux positions différentes, et
- la détermination de la position de la source vocale par comparaison des données vocales collectées à partir d'au moins deux des unités de réception vocale ; et
dans lequel les au moins deux unités de réception vocale comprennent un premier microphone et un second microphone agencés perpendiculairement l'un à l'autre, le premier microphone étant configuré pour être orienté vers un utilisateur.

2. Le procédé de commande vocale selon la revendication 1, dans lequel la plage spatiale prédéfinie est définie comme une certaine plage de distances, et dans lequel l'origine de référence est le centre du système de commande vocale.

3. Procédé de commande vocale selon la revendication 2, dans lequel la certaine plage de distances est de 20 cm, et dans lequel seuls des signaux vocaux en champ proche peuvent être collectés par les unités de réception vocale.

4. Système de commande vocale en champ proche, comprenant :
un module de réception vocale comprenant un réseau de microphones ;
un module de reconnaissance vocale ;
un module de traitement de signal étant couplé au module de réception vocale et au module de reconnaissance vocale et étant configuré pour comparer à la fois les différences d'amplitude et de phase parmi les données vocales reçues en provenance du module de réception vocale, le module de traitement de signal étant en outre configuré pour déterminer la position de la source vocale, le module de traitement de signal étant configuré pour activer le module de reconnaissance vocale si la source vocale est située à l'intérieur d'une plage spatiale prédéfinie et pour rejeter les données vocales reçues si la source vocale est située à l'extérieur de la plage spatiale prédéfinie, le module de reconnaissance vocale extrayant, lorsqu'il est activé par le module de traitement de signal, une commande vocale des données vocales reçues ;
un module de commande, connecté à une machine locale ou à un équipement local, le module de commande envoyant la commande vocale extraite à la machine locale ou à l'équipement local, le système de commande vocale en champ proche étant **caractérisé en ce que** le réseau de microphones comprend un premier microphone et un second microphone agencés perpendiculairement l'un à l'autre, le premier microphone étant configuré pour être orienté vers un utilisateur.

5. Système de commande vocale selon la revendication 5, dans lequel le module de réception vocale comprend un réseau de microphones comprenant au moins deux microphones, dans lequel chaque microphone présente une réponse directionnelle connue et collecte le signal vocal à partir d'une position et/ou d'une direction différente(s).

6. Système de commande vocale selon la revendication 4, dans lequel la plage spatiale prédéfinie est relative au centre du système de commande vocale et présente une plage de distances de 20 cm.

7. Système de commande vocale selon l'une quelconque des revendications 4 à 6, dans lequel la machine locale ou l'équipement local est un équipement de diagnostic pour des applications médicales.

8. Système de commande vocale selon la revendication 7, dans lequel la machine locale ou l'équipement local est un analyseur de champ Humphrey.

9. Système de commande vocale selon l'une quelconque des revendications 4 à 6, dans lequel la machine locale ou l'équipement local est un équipement de traitement.

10. Système de commande vocale selon l'une quelconque des revendications 4 à 9, dans lequel le système de commande vocale est en communication sans fil avec la machine locale ou l'équipement local.
